# EUROPEAN PATENT SPECIFICATION

(11) **EP 4 128 058 B1**
(45) Date of publication and mention of the grant of the patent: **08.07.2026**
(21) Application number: 21724024.1
(22) Date of filing: 26.03.2021
(51) Int. Cl.: G06N 3/098, G06N 3/045, G06N 3/0464, G06N 3/063

(54) **METHODS AND SYSTEMS TO TRAIN ARTIFICIAL INTELLIGENCE MODULES**
VERFAHREN UND SYSTEME ZUM TRAINIEREN VON MODULEN DER KÜNSTLICHEN INTELLIGENZ
PROCÉDÉS ET SYSTÈMES D'ENTRAÎNEMENT DE MODULES D'INTELLIGENCE ARTIFICIELLE

(30) Priority: 30.03.2020 WO PCT/CN2020/082103
(43) Date of publication of application: 08.02.2023
(73) Proprietor: Orange, 92130 Issy-les-Moulineaux (FR)
(72) Inventor: WANG, Xiaoyu Richard, 100013 Beijing (CN); ZHENG, Tao, Beijing (CN); WANG, Xin, Beijing (CN)
(74) Representative: Cabinet Beau de Loménie
(86) International application number: PCT/IB2021/000198
(87) International publication number: WO 2021/198773

(56) References cited:
- PRANEETH VEPAKOMMA ET AL: "Split learning for health: Distributed deep learning without sharing raw patient data", ARXIV.ORG, CORNELL UNIVERSITY LIBRARY, 201 OLIN LIBRARY CORNELL UNIVERSITY ITHACA, NY 14853, 3 December 2018 (2018-12-03), XP080988124
- MAYER RUBEN ET AL: "Scalable Deep Learning on Distributed Infrastructures : Challenges, Techniques, and Tools", ACM COMPUTING SURVEYS., vol. 53, no. 1, 25 September 2019 (2019-09-25), US, pages 1 - 37, XP055825234, ISSN: 0360-0300, Retrieved from the Internet <URL:https://arxiv.org/pdf/1903.11314.pdf> [retrieved on 20210720], DOI: 10.1145/3363554
- YIQIANG CHEN ET AL: "FedHealth: A Federated Transfer Learning Framework for Wearable Healthcare", ARXIV.ORG, CORNELL UNIVERSITY LIBRARY, 201 OLIN LIBRARY CORNELL UNIVERSITY ITHACA, NY 14853, 22 July 2019 (2019-07-22), XP081445863
- YE YUNFAN ET AL: "EdgeFed: Optimized Federated Learning Based on Edge Computing", IEEE ACCESS, IEEE, USA, vol. 8, 16 November 2020 (2020-11-16), pages 209191 - 209198, XP011822786, DOI: 10.1109/ACCESS.2020.3038287
- CHANDRA THAPA ET AL: "SplitFed: When Federated Learning Meets Split Learning", ARXIV.ORG, CORNELL UNIVERSITY LIBRARY, 201 OLIN LIBRARY CORNELL UNIVERSITY ITHACA, NY 14853, 2 September 2020 (2020-09-02), XP081752734

## Description

The present invention relates to the field of artificial intelligence. More particularly, the invention relates to methods and systems to train artificial intelligence modules.

Artificial intelligence (AI) modules are increasingly being used in a wide range of different applications. Generally, the artificial intelligence module operates in two different phases: a training phase, during which training data is used to enable the artificial intelligence module to develop a model, and a production phase during which fresh data is input to the trained Al module and the trained Al module makes a prediction, classification, or estimation by applying its model to the input data.

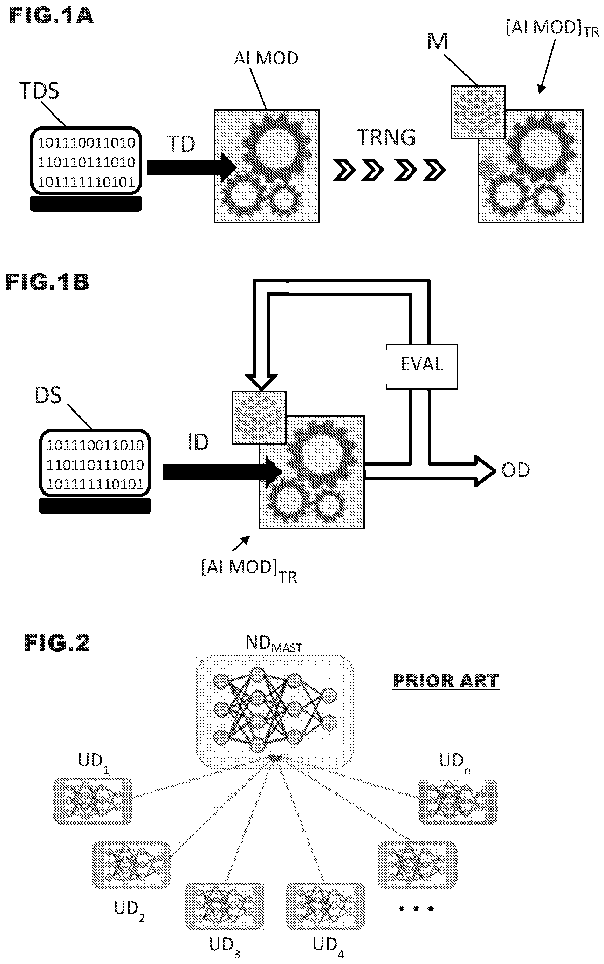

**Fig.1A** and **Fig.1****B** illustrate, respectively, a typical training phase and a typical production phase.

As can be seen in **Fig.1A****,** in a typical training phase there is a source, TDS, of training data, TD. In general, the training-data source TDS is a digital device or group of digital devices, for example: a computer, a smartphone, a tablet, a smart watch, etc. Usually, a set of training data comprising a large number of training-data samples is accumulated beforehand. The training data is supplied to an artificial intelligence module, Al MOD, and a training process, TRNG, is conducted.

Various different types of technology may be used to construct the Al module, for example: artificial neural networks, support vector machines (SVMs), and so on.

During the training process the Al module develops a model representing patterns and/or relationships that exist between features of the training data samples. The aim of the training phase is to produce a trained Al module, [Al MOD]_{TR}, embodying a model, M, which enables the trained Al module to make accurate predictions, estimates or classifications when presented with fresh inputs. The manner by which the trained Ai module embodies the model depends on the technology used to implement the Al module. For example, in the case of an Al module implemented using artificial neural networks, it may be considered that the model is embodied in the weights of the interconnections between different neurons in the network.

As is well known, the training of an Al module may involve different types of learning, for example, supervised learning (in which the Al module is presented with information regarding the expected output for a given input training data sample), and unsupervised learning (in which the Al module is not presented with a priori information regarding the expected outputs for the input training data samples). Usually, the training data set is partitioned into a first group of training data samples (training data set), that is used for training the Al module, and a second group of training data samples (validation data set) that is input to the trained Al module so as to evaluate whether the model M that has been developed enables the trained Al module to produce accurate output values.

As illustrated in **Fig.1****B,** during the production phase fresh data is obtained from a data source, DS, and serves as input data, ID, to the trained Al module, [Al MOD]_{TR}. The trained Al module applies its model M to the input data, ID, and generates an output, OD. The accuracy of the output, OD, produced by the trained Al-module during the production phase may be evaluated and the result of the evaluation may be used to adjust the model M. The nature of the output, OD, from the trained Al-module depends on the application. For example, in an application that seeks to recognize a target object in input images, the output, OD, may be an indication of whether or not the input data, ID, is an image which contains the target object.

In many applications, the Al module is designed to operate on data which has a sensitive nature or is private, for example because the data is personal data, health data, and so on. Indeed, privacy concerns may make it impossible to collect a large volume of data to train an Al module for a target application.

A proposal has been made to tackle this problem through an approach that may be called "federated learning". The federated learning approach is illustrated by **Fig.2****.**

In the example illustrated in **Fig.2****,** the training data to be used to train an Al module comes from a group of n user devices UD1, UD2, ..., UDn. According to the federated learning approach, each user device UD processes its own sensitive data to implement, locally, some initial step or steps of the training process for the Al module. The result of the local processing performed by a given user device UDj may be considered to be a partial model PMj. The partial model data PM is less sensitive/private than the initial data, or not sensitive at all, and may be sent to a central node ND_{MAST} for further processing with less prejudice to the security/privacy of the initial data. The central node, ND_{MAST}, receives partial models from the whole set of user devices and performs the final part of the training operation, to merge the partial models and generate the final Al model.

However, the federated learning approach requires the user devices to have computational capacity sufficient to process sensitive data locally and generate the partial models. In some applications this requirement may not be realistic, for instance in the case where the user device that is the source of the initial data is a smartwatch or a simple mobile phone.

PRANEETH VEPAKOMMA ET AL: "Split learning for health: Distributed deep learning without sharing raw patient data",ARXIV.ORG, CORNELL UNIVERSITY LIBRARY, 201 OLIN LIBRARY CORNELL UNIVERSITY ITHACA, NY 14853, 3 December 2018 (2018-12-03), discloses split neural networks and federated learning for facilitating health entities to train deep learning models without sharing sensitive data.

The present invention has been made in the light of these issues.

Embodiments of the present invention provide systems and methods that enable data which is potentially sensitive or private to be used for training an Al module, while still addressing privacy issues, but without requiring the significant computational capacities in the data-source devices that are needed in the case of federated learning. These systems and methods are protective of privacy and may be applied to substantially any kind of data acquired by, or stored on, digital devices, for instance: health data on smartwatches, personal images/audio/video on mobile telephone devices, and so on.

The present invention provides an artificial-intelligence-module training system to train an Al module, the training system comprising:
a source of training data, said training data source comprising at least one digital device;
an intermediate processing system comprising a plurality of processing modules;
   and
a merging module;
wherein:
   the at least one digital device is configured to extract blocks of partial data from a first item of content and distribute the blocks of data to respective different processing modules in the intermediate processing system;
   each of said respective different processing modules receiving a block of partial data from said first item of content is configured:
      to apply processing to the block of partial data to generate a partial model for the artificial intelligence module, and
      to transmit the partial model to the merging module; and
   the merging module is configured to construct a global model of the artificial intelligence module by processing operations comprising processing the partial models received from said respective different processing modules.

In the above-described system, the sensitive item of content is distributed between different processing modules in the intermediate processing system, and so no single one of the processing modules has access to the entirety of the sensitive data. Moreover, because the intermediate processing system performs one or more initial stages of the processing involved in the Al-module training process, and supplies partial models to the merging module, rather than supplying the initial content data, the privacy of the content data is maintained.

In Al-module training systems according to certain embodiments of the invention, the at least one digital device may be configured to extract blocks of partial data from the first item of content by extraction of specific target features from the item of content. In this way, specific content data relating to features that are relevant to the privacy of the data (e.g. which contribute to making the subject of the item of content more recognizable) can be separated and distributed to different processing modules in the intermediate processing system.

In Al-module training systems according to certain embodiments of the invention, the at least one digital device may be configured to extract blocks of partial data from the first item of content by simply dividing the first item of content up into blocks of partial data, notably blocks of data having a specified size. Such an approach may require lower computational resources than the preceding approach, while still providing an adequate degree of protection for the privacy of the source data.

In the Al-module training system, the at least one digital device may be configured to transmit ancillary data in association with the blocks of partial data from the first item of content. The ancillary data may comprise positional data indicative of the position of the respective partial block of data within the first item of content. The respective different processing modules may then transmit to the merging module their partial models as well as the positional data associated with the blocks of partial data from which the partial models were produced. In this way, the merging module can correctly organize the data it receives that relates to the first item of content.

Each of the processing modules may be configured to apply a convolution operation to its received block of partial data from the first item of content. It is difficult to recognize the original content by inspection of the result of the convolution operation, and so the privacy of the original content is protected despite the fact that the partial models are sent from the processing modules to a common merging module. The intermediate processing system may comprise a set of servers implementing the processing modules.

The merging module may be configured to construct a global model of the artificial intelligence module by performing a series of pooling and convolution operations on the partial models received from the respective different processing modules, and by training a fully-connected neural network using the results of the pooling and convolution operations. Together with the convolution operation performed by the processing modules 5, these convolution and pooling operations performed by the merging module 10 in this example implement the **CNN** algorithm, which may help abstract features and reduce data volume. Such operations provide parallel processing, facilitating the merging of the data.

The present invention further provides an intermediate processing system configured for use in the above-described Al-module training system. The intermediate processing system comprises:
a plurality of processing modules configured to receive respective blocks of partial data from said at least one data-source device, said blocks of partial data being extracted from a common item of digital content;
wherein each of the respective different processing modules is configured:
   to apply processing to its respective received block of partial data to generate a partial model for the artificial intelligence module, and
   to transmit the partial model to the merging module of the Al-module training system.

The present invention still further provides a digital device configured for use as a source of training data for an artificial-intelligence-module training system comprising the above-described intermediate processing system, wherein said digital device is configured to:
extract blocks of partial data from a first item of content; and
distribute the blocks of data to respective different processing modules in the intermediate processing system, so that each of said different processing modules may apply processing to the block of partial data to generate a partial model for the artificial intelligence module and transmit said partial model to a merging module in the artificial-intelligence-module training system.

The present invention still further provides a merging module configured for use in an artificial-intelligence-module training system comprising the above-described intermediate processing system, wherein said merging module is configured to:
receive partial models from different processing modules in the intermediate processing system; and
construct a global model of the artificial intelligence module by performing processing operations including processing the partial models received from said different processing modules.

Embodiments of the invention further provide a computer-implemented Al-module training method, as specified in appended claim 12.

Embodiments of the invention still further provide a computer program comprising instructions which, when the program is executed by a processor, cause the processor to carry out steps c) and d) of the method according to appended claim 12.

Embodiments of the invention still further provide a computer-readable medium comprising instructions which, when executed by a processor, cause the processor to carry out steps c) and d) of the method according to appended claim 12.

The above-mentioned Al-module training system and method, intermediate processing system and associated computer program and computer-readable medium, enable sensitive data to be used in training an Al module, while protecting the sensitive data, and without requiring inordinate processing capability in the source devices.

Further features and advantages of embodiments of the present invention will become apparent from the following description of said embodiments, which is given by way of illustration and not limitation, illustrated by the accompanying drawings, in which:
**Figs.1A** and **1B** are diagrams schematically illustrating a training phase to train an Al module, and a production phase making use of the trained Al module, respectively;
**Fig.2** is a diagram schematically illustrating an example of a federated learning approach that has been proposed for preserving privacy of data provided by user devices;
**Figs.3A** and **3B** are diagrams schematically illustrating an approach used in certain embodiments of the invention, in which data provided by user devices is distributed among a set of processing nodes, in which:

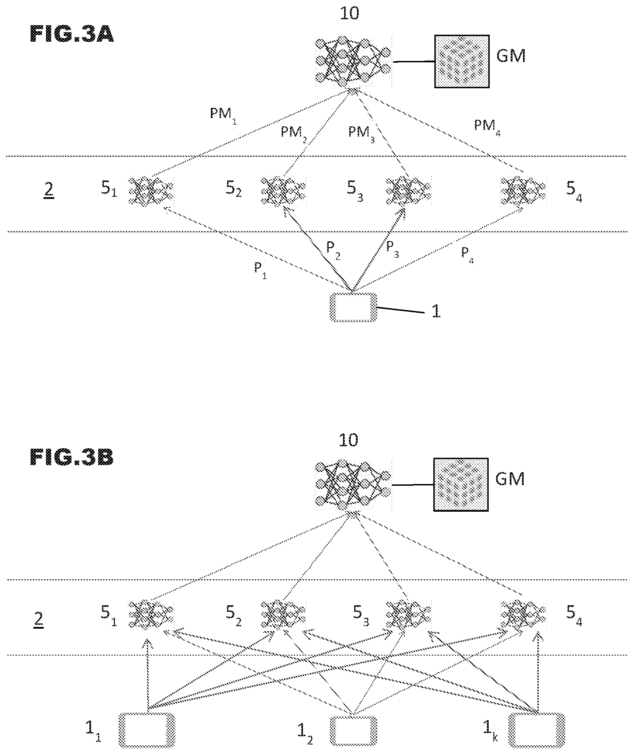

   **Fig.3A** illustrates an example in which a single user device distributes data to a plurality of processing nodes, and
   **Fig.3B** illustrates an example in which multiple user devices distribute data to the plurality of processing nodes;

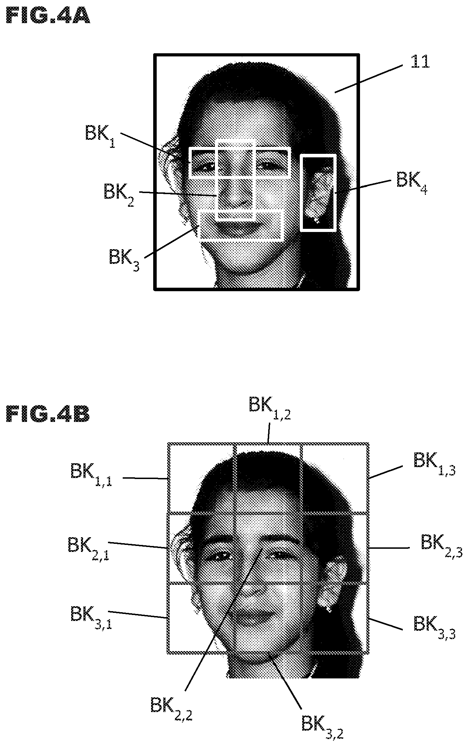

**Figs.4A** and **4B** **are** diagrams schematically illustrating two different data-division schemes that are employed in different embodiments of the invention, in which:
   **Fig.4A** illustrates a data-division scheme in which critical regions of the data are identified and distributed to different processing nodes, and
   **Fig.4B** illustrates a data-division scheme in which the data is divided up into non-specific parts and the parts are distributed to different processing nodes;

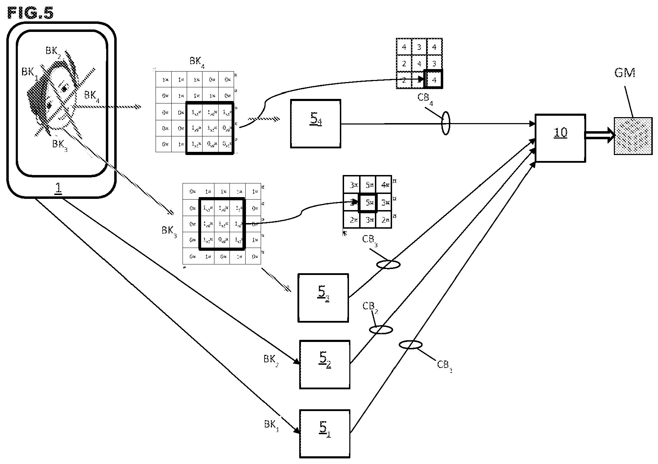

**Fig.5** illustrates an example of implementation of the approach represented in **Fig.4B** in an architecture according to **Fig.3A****;**

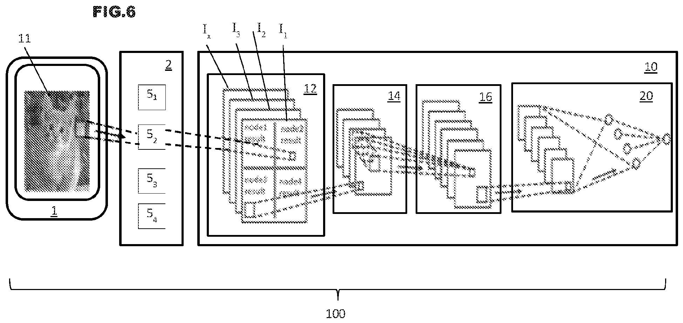

**Fig.6** is a functional block diagram illustrating an example of an Al-module training system according to an embodiment of the invention; and

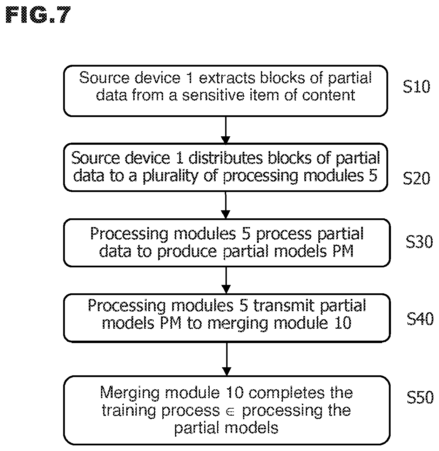

**Fig.7** is a flow diagram illustrating an example of an example computer-implemented method to train an Al-module, according to an embodiment of the invention.

As noted above, in embodiments of the invention the training work involved in training an Al module is distributed between a set of plural processing nodes provided downstream of the source device(s) where the data is acquired/stored, and a merging module. The sensitive data acquired/stored in a source device is divided into several parts (partial data) and the partial data, which is less sensitive than the initial data, is distributed among the processing nodes. The merging module which accumulates data relating to the different blocks of partial data receives the partial data after initial processing by the plural processing nodes. In this way, no single node downstream of the source device gets the whole sensitive information in the source data, and the partial data transiting between devices is less sensitive.

**Fig.3A** illustrates an architecture implementing this approach in respect of data provided by a first source device 1, for example a user's smartphone. The example represented in **Fig.3A** is simplified.

As shown in **Fig.3A****,** the source device 1 is configured to process full (sensitive) data acquired or stored by the source device 1 (such as images, videos or audio recordings which can contain personal information) and to divide up the data for distribution to an intermediate processing system 2 which contains a plurality of processing nodes 5. In the illustrated example there are four processing nodes 5₁, 5₂, 5₃ and 5₄. Typically, software installed on the source device 1 implements the processing of the acquired/stored data to divide up each item of initial content into partial data P₁-P₄ and to distribute each portion of partial data to a respective one of the processing nodes 5.

It will be understood that the invention is not limited to the case where the intermediate processing system 2 contains four processing modules 5. In the case of handling highly-sensitive content, a large number of processing modules 5 may be provided so that the data source 1 can send to each one only a small piece of the source item of content, thereby providing an increased degree of protection. Such an implementation is liable to be costly in terms of equipment/processing resources in the intermediate processing system 2 but this may be acceptable in some use cases. On the other hand, for a given number of processing nodes 5 in the intermediate processing system 2, the pattern of distribution of partial data to processing nodes can be optimized so as to provide improved protection for the sensitive data.

Each processing node 5 executes one or more initial steps in the training of the Al module and outputs a respective partial model PM to a merging module 10. The merging module 10 processes the set of partial models PM and performs the remaining steps in the Al module training process to establish the global model GM that will be applied by the trained Al module during a subsequent production phase.

The source device 1 may be substantially any device that generates, acquires or stores digital content. Some non-limiting examples of possible source devices include: computers, mobile phones, tablet devices, smartwatches, personal digital assistants, IoT devices, etc. The items of digital content which constitute the training samples for the Al module may be substantially any forms of digital data. Some non-limiting examples of digital content to which the invention may be applied include: photographs and other image data, audio data, video data, health data, behavioural data (e.g. data regarding a user's viewing habits, shopping habits, etc.), and so on.

The processing nodes 5 in the intermediate processing system 2 may take various forms. Typically, each of the processing nodes may be implemented in a separate server apparatus. In order to ensure protection of the privacy of the sensitive data, the processing nodes 5 in the intermediate processing system 2 are configured not to interact with one another.

The merging module 10 may take various forms. Typically, the merging module 10 is implemented in another server apparatus.

The connections between the source device 1 and the intermediate processing system 2, and between the intermediate processing system 2 and the merging module 10, may take various forms including, but not limited to, wired connections, wireless connections, LAN, WAN, and so on. Typically, the devices are interconnected via a data network or a telephone network.

In practice, training data for training the Al-module is liable to come from a number of different digital devices, e.g. from a large number of user devices.

**Fig.3B** illustrates a case where, in the architecture of Fig.3A, a plurality of source devices 1 (for example a plurality of smartphones) distributes partial data to processing modules 5₁ to 5₄ in the intermediate processing system 2.

In the example illustrated in **Fig.3B****,** all of the source devices 1 distribute their data to the same set of processing modules 5₁ to 5₄. However, this is not essential. For example, a first one of the source devices 1₁ may distribute blocks of partial data to a first sub-set of the processing modules 5 in the intermediate processing system 2, whereas another source device 1ⱼ may distribute blocks of partial data to all of the processing modules 5 in the intermediate processing system 2, or to a second sub-set of the processing modules 5 (and there may be overlap between the processing modules in the first and second sub-sets). Moreover, as described below, the distribution of partial data to processing modules 5 in the intermediate processing system 2 may change in a dynamic manner such that two source devices may make the same assignment of partial data to processing modules at a first time but a different assignment from one another at a second time.

The source device 1 may use different approaches for dividing an item of content into portions for distribution to different processing modules 5. Two particular approaches shall be discussed below, with reference to **Fig.4A** and **Fig.4B****.**

In the examples illustrated by **Fig.4A** and **Fig.4B****,** a photograph 11 of a girl's face has been acquired on a smartphone and this photograph constitutes an item of content that is intended to serve as a training data sample during training of an Al module. Privacy concerns may arise in a case where a photograph of a specific individual is to be used for training an Al module, so this item of content constitutes a sensitive data item.

According to a first data-division approach illustrated in **Fig.4A****,** specific target features are identified within the item of content (photograph 11) and, for each of the identified features, the corresponding image data is sent to a respective different processing node 5. Thus, for example, a block BK₁ of image data representing the eyes visible in the photograph 11 may be identified and transmitted to a first processing node 5₁. In a similar way, a block BK₂ of image data representing the nose visible in the photograph 11 may be identified and transmitted to a second processing node 5₂, a block BK₃ of image data representing the mouth visible in the photograph 11 may be identified and transmitted to a third processing node 5₃, and a block BK₄ of image data representing the ear visible in the photograph 11 may be identified and transmitted to a fourth processing node 5₄. In general, the image data representing the individual features identified in the photograph 11 is less sensitive than the data representing the total image, notably because it will usually be impossible (or, at least, extremely difficult) to identify the photographed individual based solely on the image data of a single one of the identified features. Thus, privacy concerns do not arise, or are reduced, in the case where the image data representing the individual features is distributed to different processing nodes 5 in the intermediate processing system 2.

Known techniques may be employed in the source device 1 to detect the face in the source photographic image, and to extract the target features of the face. Some non-limiting examples of techniques that may be used in face detection include: the Adaboost algorithm, support vector machine-based classifiers, decision trees, Bayes classifiers, neural networks, etc. Some non-limiting examples of techniques that may be used for extraction of target features include: geometry-based techniques (e.g. involving edge-detection, filtering, gradient analysis, etc.), template-based techniques (e.g. involving use of deformable templates, energy functions, analysis of correlation, etc.), and techniques based on colour segmentation.

Considered more generally, according to the type of approach illustrated by **Fig.4A****,** the source device has software installed which is preconfigured to process full (sensitive) data stored by or acquired by the source device (such as images, videos or audio recordings which can contain personal information) and this local software decides to extract specific parts of the sensitive data which are deemed to be less sensitive ("partial data"), for distribution to different processing nodes in the intermediate processing system 2. There may be overlap between the different parts that are extracted from the source item of content, depending on the type of training that is to be performed. For instance, in a case where the processing nodes 5 and/or the merging module 10 implement a convolutional training process, such an overlap may be beneficial, or even necessary.

The source device 1 may use different approaches to determine which processing node receives which block of partial data. Thus, for example, in certain embodiments of the invention, the source device 1 distributes the blocks of partial data randomly to the processing nodes 5. In certain embodiments of the invention, the source device 1 distributes the blocks of partial data to the processing nodes 5 according to a non-random distribution rule, for example there may be a fixed assignment of image data relating to a particular target feature (e.g. eyes) to a specific one of the processing nodes. Another example of a non-random distribution rule could, for example, involve a dynamic pattern for changing the assignment of data blocks to processing modules over time. In certain embodiments of the invention, the assignment of blocks of partial data to processing nodes is designed to let the distances, in terms of their separation within the source content, among partial images received by the same processing module (distribution node) be as large as possible. In this way, one processing node 5ₖ cannot get a big image from the partial images it receives.

The source device 1 may be configured to associate ancillary data to the blocks of partial data sent to different processing nodes, to help the merging module 10 to link the results from the different processing nodes 5 in the correct order to finish the rest of the operations. Each processing module 5 then forwards the partial model generated thereby to the merging module 10 together with the ancillary data.

The ancillary data may include, for each block of partial data P, positional data indicative of the location of the partial data within the overall source item of content. It is not essential for the positional data to be explicitly descriptive of the location of the partial data within the source item of content (e.g. a set of positional coordinates). Instead, the positional data may be configured in different ways, for example, it may be an index value. In principle, in an embodiment wherein the same feature (e.g. image data representing the nose) extracted from different source items of content is always distributed to the same processing module 5ₖ within the intermediate processing system 2, it may be permissible to omit the positional information.

In certain preferred embodiments of the invention the allocation of which parts of the source item of content are distributed to which particular processing nodes is defined between the source device 1 and the merging module 10. For example, a predefined distribution pattern known to the merging module 10 may be specified in software that is installed in the source device and which implements the data division and distribution process. Alternatively, a plurality of predefined distribution patterns may be specified and the pattern to be implemented at a given time may be chosen by the source device 1, or by the merging module 10, which instructs the other regarding the choice that has been made. Moreover, it is not essential for the distribution pattern to be predefined: instead, the source device 1 or the merging module 10 may specify a new pattern and then inform the other that the new pattern is to be used.

The ancillary data may also include an identifier corresponding to the source item of content, so that individual training data samples may be differentiated from one another. In principle, in an embodiment wherein the overall system performs synchronous processing, it may be permissible to omit such an identifier, or to replace it by a time stamp.

A second data-division approach that may be used in embodiments of the present invention is illustrated in **Fig.4B****.**

According to the approach illustrated in **Fig.4B****,** the source item of content is divided up into non-specific features, e.g. into blocks having a particular size, without reference to the semantic content of the image within the block. So, in the example illustrated in **Fig.4B****,** the source photograph is divided into three rows of three blocks: with blocks BK_{1,1}, BK_{1,2}, and BK_{1,3} in the top row, blocks BK_{2,1}, BK_{2,2}, and BK_{2,3}, in the middle row, and blocks BK_{3,1}, BK_{3,2}, and BK_{3,3} in the bottom row.

More generally, according to the approach illustrated in **Fig.4B****,** a respective block of nxm image pixels may be extracted from a source picture having NxM pixels (N = a x n, and M = b x m, where a and b are positive whole numbers) and sent to a respective one of the processing nodes 5. In preferred embodiments of the invention the partial images are blocks of nxn pixels extracted from a larger picture consisting of NxN pixels, where N = c x n, where c is a positive whole number). The different pieces processed by the processing modules 5 have the same dimensions, but they come from different positions in a bigger picture. After processing of the distributed partial data by the processing modules 5, it is difficult to reconstruct the original item of content. Indeed, in embodiments of the invention that make use of Al training frameworks such as convolutional neural networks, involving convolution operations performed by the processing modules 5, each individual convolution is carried out on a piece of the item of content, and it is particularly difficult to reconstruct the original content from the results of the convolutions, enhancing the privacy of the process.

**Fig.5** illustrates a simplified example of an implementation of the approach represented by **Fig.4B****.**

The description below of certain embodiments of the invention, given in relation to Fig.5 and subsequent figures, deals with examples in which the overall Al training algorithm is a convolutional neural network (CNN) having a certain number of convolution and pooling phases before application of data to a fully-connected neural network. In the described examples only the first convolution operation of the CNN algorithm is performed in the intermediate processing system 2 and the remainder of the CNN algorithm is implemented by the merging module 10. It is to be understood that the described embodiments are not limited having regard to the specifics of the described implementations of the CNN. To the contrary, various embodiments of the invention which implement a CNN algorithm for training an Al module may make use of a number of convolution and pooling stages that is different from the number in the examples below. In a similar way, the processing modules 5 in the intermediate processing system 2 may perform additional pooling and convolution steps of the CNN algorithm. Moreover, in different embodiments of the invention the specifics of the convolution operation performed by the processing modules 5 may be different from the details in the examples described below: for instance, other embodiments may use a different type of padding, other embodiments may use a different stride of the kernel across the source data, and so on.

In the example illustrated in **Fig.5****,** a source image on a user device 1 is divided into four blocks of partial image data, each comprising 5x5 pixels from the initial image, and each processing module 5 performs a convolution on the partial image data (with same padding, and a stride of 1 horizontally and vertically), using a 3x3 convolution kernel of the following form:

| | | |
|---|---|---|
| 1 | 0 | 1 |
| 0 | 1 | 0 |
| 1 | 0 | 1 |

The results of the convolution operations performed by the processing modules 5 are sent to the merging module 10. Thus, in this example, a block BK₃ of partial image data is distributed to the processing module 5₃ which performs a convolution operation on the block BK₃ and outputs the result CB₃ to the merging module 10. Likewise, a block BK₁ of partial image data is distributed to the processing module 5₁ which performs a convolution operation on the block BK₁ and outputs the result CB₁ to the merging module 10, a block BK₂ of partial image data is distributed to the processing module 5₂ which performs a convolution operation on the block BK₂ and outputs the result CB₂ to the merging module 10, and a block BK₄ of partial image data is distributed to the processing module 5₄ which performs a convolution operation on the block BK₄ and outputs the result CB₄ to the merging module 10. Each of the outputs from the processing modules 5 may be considered to represent a respective partial model, from which partial models the merging module 10 will generate the overall model GM of the trained Al module.

The source device 1, processing nodes 5 and the merging module 10 should have the same information regarding the training process, for instance: the size of the picture, the size of the partial image and the size of the convolution operation, etc.

**Fig.6** represents processing modules that are included in an example Al-module training system 100 according to an embodiment of the present invention. As can be seen from **Fig.6****,** the system includes at least one source device 1 which distributes blocks of partial data to processing modules 5 in an intermediate processing system 2. In this example, the processing modules 5 implement a convolution operation and then forward the results to the merging module 10.

In the example illustrated in **Fig.6****,** the merging module 10 comprises a number of component modules that perform pooling and convolution operations, as well as a fully-connected artificial neural network, and completes the training process so that the output from the neural network constitutes the estimate, prediction or classification produced by the Al module.

More particularly, in this example the merging module 10 includes a first pooling module 12, which pools the convolution results relating to a same item of content that are received from the processing modules 5 in the intermediate processing system. The first pooling module 12 also pools the respective results received from the intermediate processing system 2 in respect of a plurality of items of content I₁, I₂, ..., I_{X}. Each item of content I constitutes a respective training data sample.

The merging module 10 further includes a first convolution module 14 which receives as an input the output from the pooling module 12, and performs a convolution operation on the received input. The convolution results produced by the first convolution module 14 are output to a second pooling module 16. The second pooling module 16 pools the results of the convolutions performed by the first convolution module 14 and applies the pooled data to input nodes of a fully-connected neural network 20 so as to train the fully-connected neural network 20. The training of the fully-connected neural network 20 completes the building of the global model GM.

There are a lot of weight values on each connection of the neural network 20. The training process establishes these values to achieve a fully connected network. Generally, in cases where the **CNN** algorithm is applied for AI training it is considered that the fully connected network at the end of the processing chain constitutes the trained AI module. However, it should be borne in mind that, during the production phase, the settings of the other modules in merging module 10, i.e. the settings of the convolution and pooling modules, contribute to achieving the output of the AI module at the output of network 20. In general, the choice of training algorithm determines these settings.

Although **Fig.6** illustrates the various component modules of the merging module 10 as separate items 12, 14, 16 and 20, it will be understood that Fig.6 is a functional block diagram and, in practice, the relevant functions may be implemented using a greater or lesser number of modules (i.e. some functions may be amalgamated into a common module, and/or some functions may be broken down into sub-processes performed by separate modules). Moreover, in many embodiments of the invention the component modules 12, 14, 16 and 20 are implemented in software.

After the training process has been completed, the trained Al-module may be used in the production phase. During the production phase, the new data is input to the first pooling module 12 of the merging module 10 and is processed according to the general model that was developed during the training phase to produce an output (e.g. a classification result) at the output of the fully-connected network 20.

As for the conventional production phase illustrated in **Fig.1B****,** during a production phase using an Al-module trained by a process embodying the present invention further development of the global model GM may take place based on an evaluation of the results produced by the trained Al-model.

The present invention provides a computer-implemented method to train an Al-module. An embodiment of such a computer-implemented method is illustrated by **Fig.7****.** The **Fig.7** example corresponds to the operation of the above-described system.

In the example illustrated in **Fig.7****,** the method comprises a process of extracting blocks of partial data from a first item of digital content stored or acquired at a digital device (S10). The extraction process is performed by the digital device 1 in order to protect the privacy of the content data. The source device 1 distributes (S20) the blocks of partial to respective different processing modules 5 in the intermediate processing system 2, for example as discussed above in relation to Fig.4A or 4B. The processing modules receiving the blocks of partial data apply processing (S30) to their respective blocks of partial data to generate respective partial models PM for the artificial intelligence module. This processing may, for example, comprise a convolution operation using a specified kernel. The partial models (PM) are transmitted (S40) from the processing modules 5 of the intermediate processing system 2 to the merging module 10. The merging module 10 then constructs (S50) a global model GM for the artificial intelligence module by performing processing operations. The processing operations include processing the partial models received from the respective different processing modules 5.

The implementation of the method of **Fig.7** can exploit techniques discussed above in connection with the training systems illustrated in **Fig.3A, Fig.3B** and **Fig.6** and in connection with the techniques described with reference to **Fig.4A, Fig.4B** and **Fig.5****.**

The present disclosure also includes a method performed by the intermediate processing system 2. This method may correspond to steps S30 and S40 of **Fig.7****.**

Although the invention has been described above with reference to certain specific embodiments, it is to be understood that various modifications and adaptations may be made within the scope of the appended claims.

Thus, for example, although the embodiments described above make use of a CNN algorithm as the Al training algorithm, other Al training algorithms may be used in the invention. An advantage of the CNN algorithm is the opportunities it provides for parallelism, and the non-reversibility of the convolution operations used therein (which protect the sensitive source content from an early stage in the processing chain). Preferred embodiments of the invention implement Al training algorithms that likewise enable parallel processing and have the non-reversibility property.

As another example, although the drawings illustrate direct connections between the source device(s) 1 and the intermediate processing system 2, and between the intermediate processing system 2 and the merging module 10, in some cases there may be one or more intervening devices, for example for routing purposes.

It is to be understood that in the present disclosure the expression "source" used in relation to devices distributing content data does not imply that the item of content was generated by the device in question; to the contrary, the device may have acquired the item of content from a different device which generated the content.

## Claims

1. A digital device (1) configured as a source of training data of an artificial-intelligence-module training system (100) comprising an intermediate processing system (2) and a merging module node (10),
wherein said digital device (1) is configured to: extract blocks of partial data from a first item of content; and
distribute the blocks of data to respective different processing modules (5) in the intermediate processing system (2), so that:
- each of said different processing modules (5) applies processing to its respective block of partial data to generate a partial model (PM) for the artificial intelligence module and transmits said partial model (PM) to the merging module node (10) in the artificial-intelligence-module training system (100), and that:
- the merging module node (10) constructs a global model (GM) of an artificial intelligence module by performing processing operations including processing the partial models (PM) received from said respective different processing modules (5).

2. A digital device (1) according to claim 1, said digital device (1) being configured to extract blocks of partial data from the first item of content by extraction of specific target features in the item of content.

3. A digital device (1) according to claim 1, said digital device (1) being configured to extract blocks of partial data from the first item of content by dividing the first item of content into blocks of partial data, the blocks having a specified size.

4. A digital device (1) according to any one of claims 1 to 3, said digital device (1) being configured to transmit ancillary data in association with the blocks of partial data from the first item of content, said ancillary data comprising positional data indicative of the position of the respective block of partial data within the first item of content.

5. An intermediate processing system (2) configured for use in an artificial-intelligence-module training system (100), said artificial-intelligence-module training system comprising a training data source device (1) and a merging module node (10), said training data source device (1) comprising at least one digital device (1) according to any one of claims 1 to 4, the intermediate processing system (2) comprising:
a plurality of processing modules (5) configured to receive respective blocks of partial data from said at least one training data source device (1), said blocks of partial data being extracted from a common item of digital content;
wherein each of the respective different processing modules (5) is configured:
to apply processing to its respective received block of partial data to generate a partial model (PM) for the artificial intelligence module, and
to transmit the partial model (PM) to the merging module node (10) of the artificial-intelligence-module training system
so that the merging module node (10) constructs a global model (GM) of the artificial-intelligence-module by performing processing operations including processing the partial models (PM) received from said respective different processing modules (5).

6. An intermediate processing system (2) according to claim 5, wherein each of said respective different processing modules (5) is configured to apply a convolution operation to its received block of partial data from said first item of content.

7. An intermediate processing system (2) according to any one of claims 5 to 6, wherein said at least one digital device (1) is configured according to claim 4, said processing modules (5) being configured to receive the ancillary data and to transmit to the merging module node (10) of the artificial-intelligence-module training system their partial models (PM) and the positional data associated with the blocks of partial data from which the partial models were produced.

8. An intermediate processing system (2) according to any one of claims 5 to 7, wherein the intermediate processing system (2) comprises a set of servers implementing said processing modules (5).

9. A merging module node (10) of an artificial-intelligence-module training system (100) comprising an intermediate processing system (2) according to any one of claims 5 to 8;
wherein said merging module node (10) is configured to:
receive partial models (PM) from different processing modules (5) of the intermediate processing system (2); and
construct a global model (GM) of the artificial intelligence module by performing processing operations including processing the partial models (PM) received from and generated by said different processing modules (5) by applying processing to blocks of partial data extracted from a common item of digital content and distributed by a digital device according to any one of claims 1 to 4.

10. A merging module node (10) according to claim 9, wherein the merging module node (10) is configured to construct the global model (GM) of the artificial intelligence module by performing a series of pooling and convolution operations on the partial models (PM) received from said respective different processing modules (5), and by training a fully-connected neural network (20) using the results of said pooling and convolution operations.

11. An artificial-intelligence-module training system (100) to train an artificial intelligence module, the training system (100) comprising:
a source of training data, said training data source comprising at least one digital device (1) according to any one of claims 1 to 4;
an intermediate processing system (2) according to any one of claims 5 to 8; and
a merging module node (10) according to any one of claims 9 to 10.

12. A computer-implemented method to train an artificial intelligence module, the method comprising:
a) extracting blocks of partial data from a first item of content stored or acquired at a digital device (1),
b) distributing the blocks of data from the digital device to respective different processing modules (5) in an intermediate processing system (2);
c) applying processing to its respective block of partial data, by the respective different processing modules (5), to generate respective partial models (PM) for the artificial intelligence module;
d) transmitting the partial models (PM) from the intermediate processing system (2) to a merging module node (10); and
e) constructing a global model (GM) of the artificial intelligence module by the performance of processing operations by the merging module node (10), said processing operations including processing the partial models (PM) received from the respective different processing modules (5).

13. A computer program comprising instructions which, when the program is executed by a processor, cause the processor to carry out steps of the method according to claim 12.

14. A computer-readable medium comprising instructions which, when executed by a processor, cause the processor to carry out steps of the method according to claim 12.

## Patentansprüche

1. Digitale Vorrichtung (1), die als eine Quelle von Trainingsdaten eines Systems (100) zum Trainieren von Modulen künstlicher Intelligenz, das ein Zwischenverarbeitungssystem (2) und einen Zusammenführungsmodulknoten (10) umfasst, konfiguriert ist,
wobei die digitale Vorrichtung (1) zu Folgendem konfiguriert ist:
Extrahieren von Blöcken von Teildaten aus einem ersten Element von Inhalt; und
Verteilen der Blöcke von Daten an jeweilige verschiedene Verarbeitungsmodule (5) in dem Zwischenverarbeitungssystem (2), so dass:
- jedes der verschiedenen Verarbeitungsmodule (5) eine Verarbeitung auf seinen jeweiligen Block von Teildaten anwendet, um ein Teilmodell (PM) für das Modul künstlicher Intelligenz zu erzeugen, und das Teilmodell (PM) an den Zusammenführungsmodulknoten (10) in dem System (100) zum Trainieren von Modulen künstlicher Intelligenz überträgt, und dass:
- der Zusammenführungsmodulknoten (10) ein globales Modell (GM) eines Moduls künstlicher Intelligenz durch Durchführen von Verarbeitungsoperationen, die das Verarbeiten der von den jeweiligen verschiedenen Verarbeitungsmodulen (5) empfangenen Teilmodelle (PM) beinhalten, erstellt.

2. Digitale Vorrichtung (1) nach Anspruch 1, wobei die digitale Vorrichtung (1) dazu konfiguriert ist, Blöcke von Teildaten aus dem ersten Element von Inhalt durch eine Extraktion spezifischer Zielmerkmale in dem Element von Inhalt zu extrahieren.

3. Digitale Vorrichtung (1) nach Anspruch 1, wobei die digitale Vorrichtung (1) dazu konfiguriert ist, Blöcke von Teildaten aus dem ersten Element von Inhalt durch Aufteilen des ersten Elements von Inhalt in Blöcke von Teildaten zu extrahieren, wobei die Blöcke eine vorgegebene Größe aufweisen.

4. Digitale Vorrichtung (1) nach einem der Ansprüche 1 bis 3, wobei die digitale Vorrichtung (1) dazu konfiguriert ist, Zusatzdaten in Verbindung mit den Blöcken von Teildaten von dem ersten Element von Inhalt zu übertragen, wobei die Zusatzdaten Positionsdaten umfassen, die die Position des jeweiligen Blocks von Teildaten innerhalb des ersten Elements von Inhalt angeben.

5. Zwischenverarbeitungssystem (2), das zur Verwendung in einem System (100) zum Trainieren von Modulen künstlicher Intelligenz konfiguriert ist, wobei das System zum Trainieren von Modulen künstlicher Intelligenz eine Trainingsdatenquellenvorrichtung (1) und einen Zusammenführungsmodulknoten (10) umfasst, wobei die Trainingsdatenquellenvorrichtung (1) mindestens eine digitale Vorrichtung (1) nach einem der Ansprüche 1 bis 4 umfasst, wobei das Zwischenverarbeitungssystem (2) Folgendes umfasst:
mehrere Verarbeitungsmodule (5), die dazu konfiguriert sind, jeweilige Blöcke von Teildaten von der mindestens einen Trainingsdatenquellenvorrichtung (1) zu empfangen, wobei die Blöcke von Teildaten aus einem gemeinsamen Element von digitalem Inhalt extrahiert werden;
wobei jedes der jeweiligen verschiedenen Verarbeitungsmodule (5) zu Folgendem konfiguriert ist:
Anwenden einer Verarbeitung auf seinen jeweiligen empfangenen Block von Teildaten, um ein Teilmodell (PM) für das Modul künstlicher Intelligenz zu erzeugen, und
Übertragen des Teilmodells (PM) an den Zusammenführungsmodulknoten (10) des Systems zum Trainieren von Modulen künstlicher Intelligenz, so dass der Zusammenführungsmodulknoten (10) ein globales Modell (GM) des Moduls künstlicher Intelligenz durch Durchführen von Verarbeitungsoperationen, die das Verarbeiten der von den jeweiligen verschiedenen Verarbeitungsmodulen (5) empfangenen Teilmodelle (PM) beinhalten, erstellt.

6. Zwischenverarbeitungssystem (2) nach Anspruch 5, wobei jedes der jeweiligen verschiedenen Verarbeitungsmodule (5) dazu konfiguriert ist, eine Faltungsoperation auf seinen empfangenen Block von Teildaten von dem ersten Element von Inhalt anzuwenden.

7. Zwischenverarbeitungssystem (2) nach einem der Ansprüche 5 bis 6, wobei die mindestens eine digitale Vorrichtung (1) nach Anspruch 4 konfiguriert ist, wobei die Verarbeitungsmodule (5) dazu konfiguriert sind, die Zusatzdaten zu empfangen und ihre Teilmodelle (PM) und die Positionsdaten, die mit den Blöcken von Teildaten assoziiert sind, aus denen die Teilmodelle hergestellt wurden, an den Zusammenführungsmodulknoten (10) des Systems zum Trainieren von Modulen künstlicher Intelligenz zu übertragen.

8. Zwischenverarbeitungssystem (2) nach einem der Ansprüche 5 bis 7, wobei das Zwischenverarbeitungssystem (2) einen Satz von Servern umfasst, die die Verarbeitungsmodule (5) implementieren.

9. Zusammenführungsmodulknoten (10) eines Systems (100) zum Trainieren von Modulen künstlicher Intelligenz, das ein Zwischenverarbeitungssystem (2) nach einem der Ansprüche 5 bis 8 umfasst;
wobei der Zusammenführungsmodulknoten (10) zu Folgendem konfiguriert ist:
Empfangen von Teilmodellen (PM) von verschiedenen Verarbeitungsmodulen (5) des Zwischenverarbeitungssystems (2); und
Erstellen eines globalen Modells (GM) des Moduls künstlicher Intelligenz durch Durchführen von Verarbeitungsoperationen, die das Verarbeiten der von den verschiedenen Verarbeitungsmodulen (5) empfangenen und durch diese erzeugten Teilmodelle (PM) beinhalten, indem eine Verarbeitung auf aus einem gemeinsamen Element von digitalem Inhalt extrahierte und durch eine digitale Vorrichtung nach einem der Ansprüche 1 bis 4 verteilte Blöcke von Teildaten angewendet wird.

10. Zusammenführungsmodulknoten (10) nach Anspruch 9, wobei der Zusammenführungsmodulknoten (10) dazu konfiguriert ist, das globale Modell (GM) des Moduls künstlicher Intelligenz durch Durchführen einer Reihe von Pooling- und Faltungsoperationen an den von den jeweiligen verschiedenen Verarbeitungsmodulen (5) empfangenen Teilmodellen (PM) und durch Trainieren eines vollständig verbundenen neuronalen Netzes (20) unter Verwendung der Ergebnisse der Pooling- und Faltungsoperationen zu erstellen.

11. System (100) zum Trainieren von Modulen künstlicher Intelligenz, um ein Modul künstlicher Intelligenz zu trainieren, wobei das Trainingssystem (100) Folgendes umfasst:
eine Quelle von Trainingsdaten, wobei die Trainingsdatenquelle mindestens eine digitale Vorrichtung (1) nach einem der Ansprüche 1 bis 4 umfasst;
ein Zwischenverarbeitungssystem (2) nach einem der Ansprüche 5 bis 8; und
einen Zusammenführungsmodulknoten (10) nach einem der Ansprüche 9 bis 10.

12. Computerimplementiertes Verfahren zum Trainieren eines Moduls künstlicher Intelligenz, wobei das Verfahren Folgendes umfasst:
a) Extrahieren von Blöcken von Teildaten aus einem ersten Element von Inhalt, das an einer digitalen Vorrichtung (1) gespeichert oder erfasst wird,
b) Verteilen der Blöcke von Daten von der digitalen Vorrichtung an jeweilige verschiedene Verarbeitungsmodule (5) in einem Zwischenverarbeitungssystem (2);
c) Anwenden einer Verarbeitung auf ihren jeweiligen Block von Teildaten durch die jeweiligen verschiedenen Verarbeitungsmodule (5), um jeweilige Teilmodelle (PM) für das Modul künstlicher Intelligenz zu erzeugen;
d) Übertragen der Teilmodelle (PM) von dem Zwischenverarbeitungssystem (2) an einen Zusammenführungsmodulknoten (10); und
e) Erstellen eines globalen Modells (GM) des Moduls künstlicher Intelligenz durch die Durchführung von Verarbeitungsoperationen durch den Zusammenführungsmodulknoten (10), wobei die Verarbeitungsoperationen das Verarbeiten der von den jeweiligen verschiedenen Verarbeitungsmodulen (5) empfangenen Teilmodelle (PM) beinhalten.

13. Computerprogramm, das Anweisungen umfasst, die, wenn das Programm durch einen Prozessor laufen gelassen wird, bewirken, dass der Prozessor Schritte des Verfahrens nach Anspruch 12 ausführt.

14. Computerlesbares Medium, das Anweisungen umfasst, die, wenn sie durch einen Prozessor laufen gelassen werden, bewirken, dass der Prozessor Schritte des Verfahrens nach Anspruch 12 ausführt.

## Revendications

1. Dispositif numérique (1) configuré sous forme de source de données d'entraînement d'un système d'entraînement de module d'intelligence artificielle (100) comprenant un système de traitement intermédiaire (2) et un nœud de module de fusion (10),
dans lequel ledit dispositif numérique (1) est configuré pour :
extraire des blocs de données partielles à partir d'un premier élément de contenu ; et
distribuer les blocs de données à des modules de traitement différents respectifs (5) dans le système de traitement intermédiaire (2), de telle sorte que :
- chacun desdits modules de traitement différents (5) applique un traitement à son bloc respectif de données partielles pour générer un modèle partiel (Partial Model, PM) pour le module d'intelligence artificielle et transmet ledit modèle partiel (PM) au nœud de module de fusion (10) dans le système d'entraînement de module d'intelligence artificielle (100), et qui :
- le nœud de module de fusion (10) construit un modèle global (Global Model, GM) d'un module d'intelligence artificielle en réalisant des opérations de traitement y compris le traitement des modèles partiels (PM) reçus en provenance desdits modules de traitement différents respectifs (5).

2. Dispositif numérique (1) selon la revendication 1, ledit dispositif numérique (1) étant configuré pour extraire des blocs de données partielles à partir du premier élément de contenu par extraction de caractéristiques cibles spécifiques dans l'élément de contenu.

3. Dispositif numérique (1) selon la revendication 1, ledit dispositif numérique (1) étant configuré pour extraire des blocs de données partielles à partir du premier élément de contenu en divisant le premier élément de contenu en blocs de données partielles, les blocs ayant une taille spécifiée.

4. Dispositif numérique (1) selon l'une quelconque des revendications 1 à 3, ledit dispositif numérique (1) étant configuré pour transmettre des données complémentaires en association avec les blocs de données partielles provenant du premier élément de contenu, lesdites données complémentaires comprenant des données positionnelles indicatives de la position du bloc respectif de données partielles à l'intérieur du premier élément de contenu.

5. Système de traitement intermédiaire (2) configuré pour l'utilisation dans un système d'entraînement de module d'intelligence artificielle (100), ledit système d'entraînement de module d'intelligence artificielle comprenant un dispositif de source de données d'entraînement (1) et un nœud de module de fusion (10), ledit dispositif de source de données d'entraînement (1) comprenant au moins un dispositif numérique (1) selon l'une quelconque des revendications 1 à 4, le système de traitement intermédiaire (2) comprenant :
une pluralité de modules de traitement (5) configurés pour recevoir des blocs respectifs de données partielles en provenance d'au moins un dispositif de source de données d'entraînement (1), lesdits blocs de données partielles étant extraits à partir d'un élément commun de contenu numérique ;
dans lequel chacun des modules de traitement différents respectifs (5) est configuré :
pour appliquer un traitement à son bloc reçu respectif de données partielles pour générer un modèle partiel (Partial Model, PM) pour le module d'intelligence artificielle, et
pour transmette le modèle partiel (PM) au nœud de module de fusion (10) du système d'entraînement de module d'intelligence artificielle de telle sorte que le nœud de module de fusion (10) construit un modèle global (Global Model, GM) du module d'intelligence artificiel en réalisant des opérations de traitement y compris le traitement des modèles partiels (PM) reçus en provenance desdits modules de traitement différents respectifs (5).

6. Système de traitement intermédiaire (2) selon la revendication 5, dans lequel chacun desdits modules de traitement différents respectifs (5) est configuré pour appliquer une opération de convolution à son bloc reçu de données partielles provenant dudit premier élément de contenu.

7. Système de traitement intermédiaire (2) selon l'une quelconque des revendications 5 et 6, dans lequel ledit au moins un dispositif numérique (1) est configuré selon la revendication 4, lesdits modules de traitement (5) étant configurés pour recevoir les données complémentaires et pour transmettre au nœud de module de fusion (10) du système d'entraînement de module d'intelligence artificielle leurs modèles partiels (PM) et les données positionnelles associées aux blocs de données partielles à partir desquels les modèles partiels ont été produits.

8. Système de traitement intermédiaire (2) selon l'une quelconque des revendications 5 à 7, dans lequel le système de traitement intermédiaire (2) comprend un ensemble de serveurs mettant en œuvre lesdits modules de traitement (5).

9. Nœud de module de fusion (10) d'un système d'entraînement de module d'intelligence artificielle (100) comprenant un système de traitement intermédiaire (2) selon l'une quelconque des revendications 5 à 8 ;
dans lequel ledit nœud de module de fusion (10) est configuré pour :
recevoir des modèles partiels (Partial Models, PM) en provenance de modules de traitement différents (5) du système de traitement intermédiaire (2) ; et
construire un modèle global (Global Model, GM) du module d'intelligence artificielle en réalisant des opérations de traitement y compris le traitement des modèles partiels (PM) reçus en provenance desdits modules de traitement différents (5), et générés par ceux-ci, en appliquant un traitement à des blocs de données partielles extraits à partir d'un élément commun de contenu numérique et distribués par un dispositif numérique selon l'une quelconque des revendications 1 à 4.

10. Nœud de module de fusion (10) selon la revendication 9, dans lequel le nœud de module de fusion (10) est configuré pour construire le modèle global (GM) du module d'intelligence artificielle en réalisant une série d'opérations de regroupement et de convolution sur les modèles partiels (PM) reçus en provenance desdits modules de traitement différents respectifs (5), et en entraînant un réseau neuronal entièrement connecté (20) en utilisant les résultats desdites opérations de regroupement et de convolution.

11. Système d'entraînement de module d'intelligence artificielle (100) pour entraîner un module d'intelligence artificielle, le système d'entraînement (100) comprenant :
une source de données d'entraînement, ladite source de données d'entraînement comprenant au moins un dispositif numérique (1) selon l'une quelconque des revendications 1 à 4 ;
un système de traitement intermédiaire (2) selon l'une quelconque des revendications 5 à 8 ; et
un nœud de module de fusion (10) selon l'une quelconque des revendications 9 et 10.

12. Procédé mis en œuvre par ordinateur pour entraîner un module d'intelligence artificielle, le procédé comprenant :
a) l'extraction de blocs de données partielles à partir d'un premier élément de contenu stocké ou acquis au niveau d'un dispositif numérique (1),
b) la distribution des blocs de données depuis le dispositif numérique à des modules de traitement différents respectifs (5) dans un système de traitement intermédiaire (2) ;
c) l'application d'un traitement à son bloc respectif de données partielles, par les modules de traitement différents respectifs (5), pour générer des modèles partiels (Partial Models, PM) respectifs pour le module d'intelligence artificielle ;
d) la transmission des modèles partiels (PM) depuis le système de traitement intermédiaire (2) à un nœud de module de fusion (10) ; et
e) la construction d'un modèle global (Global Model, GM) du module d'intelligence artificielle par le biais de la réalisation d'opérations de traitement par le nœud de module de fusion (10), lesdites opérations de traitement incluant le traitement des modèles partiels (PM) reçus en provenance des modules de traitement différents respectifs (5).

13. Programme d'ordinateur comprenant des instructions qui, lorsque le programme est exécuté par un processeur, amènent le processeur à réaliser des étapes du procédé selon la revendication 12.

14. Support lisible par ordinateur comprenant des instructions qui, lorsqu'elles sont exécutées par un processeur, amènent le processeur à réaliser des étapes du procédé selon la revendication 12.
